# EUROPÄISCHE PATENTSCHRIFT

(11) **EP 3 966 622 B1**
(45) Veröffentlichungstag und Bekanntmachung des Hinweises auf die Patenterteilung: **10.06.2026**
(21) Anmeldenummer: 20718582.8
(22) Anmeldetag: 01.04.2020
(51) Int. Cl.: G02B 27/01, B60K 35/10, B60K 35/21, B60K 35/22, B60K 35/23, B60K 35/28, B60K 35/29, G08G 1/16

(54) **PARKASSISTENZSYSTEM FÜR EIN KRAFTFAHRZEUG**
PARKING ASSISTANCE SYSTEM FOR A MOTOR VEHICLE
SYSTÈME D'AIDE AU STATIONNEMENT POUR UN VÉHICULE AUTOMOBILE

(30) Priorität: 06.05.2019 DE 102019206490
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: WYSZKA, Robert Jan, 30165 Hannover (DE); MORALES FERNÁNDEZ, Daniel, 38114 Braunschweig (DE); HAAR, Adrian, 30173 Hannover (DE); WITTKÄMPER, Michael, 38106 Braunschweig (DE); KODALLE, Pia, 49076 Osnabrück (DE); THIEL, Kevin, 14469 Potsdam (DE)
(86) Internationale Anmeldenummer: PCT/EP2020/059315
(87) Internationale Veröffentlichungsnummer: WO 2020/224877

(56) Entgegenhaltungen:
- EP-A1- 3 351 417
- EP-B1- 3 351 417
- DE-A1- 102007 042 966
- US-A1- 2016 327 790

## Beschreibung

Die Erfindung betrifft ein Parkassistenzsystem für ein Kraftfahrzeug, aufweisend ein Distanzsensorsystem, um in Abhängigkeit einer lateralen Distanz zwischen dem Kraftfahrzeug und einem Objekt in einer Umgebung des Kraftfahrzeugs ein Sensorsignal zu erzeugen und eine Recheneinheit, um basierend auf dem Sensorsignal Grafikdaten zu erzeugen. Die Erfindung betrifft ferner ein Verfahren zur Einparkunterstützung für ein Kraftfahrzeug, ein Computerprogramm und ein computerlesbares Speichermedium.

Beim unterstützten Einparken eines Kraftfahrzeugs können Ultraschallsensoren, optische Sensoren oder Kameras eingesetzt werden. In bekannten Parkassistenzsystemen wird die Abstandsinformation in Form lateraler Abstandsindikatoren auf einem Infotainmentsystem des Kraftfahrzeugs angezeigt. Der Fahrer des Kraftfahrzeugs muss also seinen Blick von der Straße nehmen und auf das Display innerhalb des Autos richten. Zusätzlich muss der Fahrer die tatsächliche Distanz zwischen dem Kraftfahrzeug und einem möglichen Hindernis basierend auf den angezeigten Informationen interpretieren, was zu Fehleinschätzungen führen kann. Beide Umstände führen zu einer Gefährdung der Sicherheit des Fahrers.

Im Dokument DE 10 2010 025 354 A1 wird ein Fahrerassistenzsystem für ein Kraftfahrzeug beschrieben, welches mehrere Kameras zur Erfassung der Umgebung des Kraftfahrzeugs aufweist, sowie eine Anzeige zum Darstellen von der Kamera aufgenommener Umgebungsbilder oder einer Draufsicht, wobei zwischen den Umgebungsbildern und der Draufsicht umgeschaltet werden kann.

Aus der EP 3 351 417 A1 ist eine Anzeigeeinheit für ein Fahrzeug und eine Anzeigemethode für ein Fahrzeug bekannt.

Die DE 10 2007 042 966 A1 betrifft eine Vorrichtung zur Darstellung der Information der Einparkhilfe eines Kraftfahrzeuges.

Vor diesem Hintergrund ist es eine Aufgabe der vorliegenden Erfindung, ein verbessertes Konzept zur Einparkunterstützung für ein Kraftfahrzeug anzugeben, durch welches eine Sicherheit für einen Fahrer des Kraftfahrzeugs erhöht wird.

Erfindungsgemäß wird diese Aufgabe durch ein Parkassistenzsystem, ein Verfahren zur Einparkunterstützung, ein Computerprogramm sowie ein computerlesbares Speichermedium nach den unabhängigen Patentansprüchen gelöst. Vorteilhafte Weiterbildungen und weitere Ausführungsformen sind Gegenstand der abhängigen Ansprüche.

Das verbesserte Konzept beruht auf der Idee, ein grafisches Element mittels eines Erweiterte-Realität-Systems in einem Blickfeld des Fahrer einzublenden, so dass eine Ausdehnung des grafischen Elements entlang einer vertikalen Achse von einem Wert einer lateralen Distanz zwischen dem Kraftfahrzeug und einem Objekt in der Umgebung des Kraftfahrzeugs abhängt.

Gemäß einem ersten unabhängigen Aspekt des verbesserten Konzepts wird ein Parkassistenzsystem für ein Kraftfahrzeug angegeben, welches ein Distanzsensorsystem und eine Recheneinheit aufweist. Das Distanzsensorsystem ist dazu eingerichtet, in Abhängigkeit von einer lateralen Distanz zwischen dem Kraftfahrzeug und einem Objekt in einer Umgebung des Kraftfahrzeugs ein Sensorsignal zu erzeugen. Die Recheneinheit ist dazu eingerichtet, basierend auf dem Sensorsignal Grafikdaten zu erzeugen. Das Parkassistenzsystem beinhaltet außerdem ein Erweiterte-Realität-System (englisch "Augmented-Reality-System", AR-System). Das AR-System ist dazu eingerichtet, ein grafisches Element in ein Blickfeld eines Fahrers des Kraftfahrzeugs einzublenden, insbesondere auf ein Anzeigeelement des AR-Systems oder des Kraftfahrzeugs zu projizieren oder auf dem Anzeigeelement anzuzeigen. Dabei hängt eine Ausdehnung des grafischen Elements entlang einer vertikalen Achse von einem Wert der Distanz ab.

Bei der lateralen Distanz kann es sich insbesondere um einen Abstand oder eine Distanz innerhalb einer zu einer Bewegungsebene des Kraftfahrzeugs parallelen Ebene, wobei die Bewegungsebene des Kraftfahrzeugs einer Ebene entspricht, innerhalb der sich das Kraftfahrzeug bewegen kann, also insbesondere parallel zu einer Ebene eines Untergrunds ist, auf dem sich das Kraftfahrzeug bewegt. Das Kraftfahrzeug weist insbesondere eine Längs- und eine Querachse auf. Die Bewegungsebene des Kraftfahrzeugs ist dann dadurch definiert, dass Längs- und Querrichtung des Kraftfahrzeugs innerhalb der Bewegungsebene liegen.

Das Distanzsensorsystem kann beispielsweise ein Kamerasystem, ein aktives optisches Sensorsystem oder ein Ultraschall-Sensorsystem, insbesondere ein aktives UltraschallSensorsystem, beinhalten. Das aktive optische Sensorsystem ist beispielsweise dazu eingerichtet, Licht auszusenden und reflektierte Anteile des Lichts zu detektieren und basierend auf den reflektierten Anteilen die laterale Distanz zu bestimmen. Analog kann das Ultraschallsensorsystem beispielsweise dazu eingerichtet sein, Ultraschallwellen in die Umgebung zu senden und reflektierte Anteile der Ultraschallwellen zu detektieren und basierend darauf die laterale Distanz zu bestimmen.

Die Grafikdaten umfassen beispielsweise Daten oder Informationen, die in einer geeigneten Form vorliegen, damit die Recheneinheit beziehungsweise das AR-System basierend auf den Grafikdaten das grafische Element erzeugen und in das Blickfeld einblenden, insbesondere auf dem Anzeigeelement darstellen, kann. Die Grafikdaten können beispielsweise in Form einer Grafikdatei oder in anderer geeigneter Form vorliegen.

Bei dem Blickfeld des Fahrers handelt es sich insbesondere um einen Raumbereich, den der Fahrer visuell wahrnehmen kann. Je nach Ausgestaltung des AR-Systems kann das Blickfeld einem tatsächlichen Blickfeld des Fahrers entsprechen, also einem räumlichen Bereich, den der Fahrer tatsächlich visuell wahrnehmen kann, unabhängig davon, in welche Richtung beispielsweise sein Kopf gedreht ist. Alternativ kann in anderen Ausführungsformen das Blickfeld einem nominalen Blickfeld des Fahrers entsprechen, also einem Blickfeld des Fahrers, wenn er seinen Kopf in eine vorgegebene, insbesondere nominale, Richtung orientiert hat und den Blick entlang dieser Richtung richtet. Die nominale Richtung kann beispielsweise einer Richtung von einer vorgegebenen Position innerhalb des Cockpits durch die Windschutzscheibe des Kraftfahrzeugs auf die Straße beziehungsweise in die Umgebung des Kraftfahrzeugs entsprechen.

Das AR-System beinhaltet beispielsweise sämtliche Komponenten, die zur Erzeugung des grafischen Elements und zur Einblendung des grafischen Elements in das Blickfeld des Fahrers basierend auf den Grafikdaten erforderlich sind. Insbesondere kann das AR-System auch das Anzeigeelement beinhalten. Beispielsweise kann auch die Recheneinheit Teil des AR-Systems sein.

Das Anzeigeelement kann beispielsweise einer Windschutzscheibe des Kraftfahrzeugs entsprechen oder einem Teil der Windschutzscheibe. Alternativ kann das Anzeigeelement auch als separates Display oder separate Anzeigefläche des AR-Systems ausgebildet sein.

Beispielsweise kann das AR-System als Head-up-Display oder als Head-mounted-Display ausgebildet sein.

Unter einem Erweiterte-Realität-System oder AR-System kann ein System verstanden werden, mittels dem von dem Fahrer erfasste Bilder der realen Umgebung durch computergenerierte Zusatzinformationen oder virtuelle Objekte, insbesondere durch das grafische Element, mittels Einblendung oder Überlagerung ergänzt werden können.

Bei der Ausdehnung des grafischen Elements kann es sich insbesondere um eine Länge des grafischen Elements entlang der vertikalen Achse handeln.

Bei der vertikalen Achse handelt es sich um eine Achse, die aus Sicht des Fahrers vertikal verläuft, also im Blickfeld des Fahrers von unten nach oben oder umgekehrt, insbesondere wenn der Fahrer seinen Blick auf das grafische Element oder das Anzeigeelement gerichtet hat. Insbesondere entspricht die vertikale Achse einer Achse, die senkrecht auf der Längs- oder Querachse des Kraftfahrzeugs steht, wenn der Fahrer in Fahrtrichtung oder in eine Richtung parallel zur Bewegungsebene des Kraftfahrzeugs blickt.

Insbesondere weicht die Richtung der vertikalen Achse ab von einer Verbindungsachse zwischen dem Distanzsensorsystem und dem Objekt.

Bei dem grafischen Element kann es sich insbesondere um ein abstraktes grafisches Element handeln, also insbesondere nicht um eine Darstellung eines real existierenden Objekts.

Bei einem Parkassistenzsystem nach dem verbesserten Konzept muss der Fahrer mit Vorteil den Blick nicht von der Straße nehmen, um das grafische Element beziehungsweise dessen Ausdehnung entlang der vertikalen Achse und somit einen Wert der Distanz zwischen dem Kraftfahrzeug und dem Objekt erfassen zu können. Dies ist möglich durch die Einblendung des grafischen Elements in das Blickfeld des Fahrers. Dies verbessert die Sicherheit des Fahrers.

Da es sich bei dem grafischen Element insbesondere um ein abstraktes grafisches Element handelt, muss eine Bedeutung des grafischen Elements nicht explizit verstanden werden. Insbesondere ist im Vergleich zu einem Kamerabild keine detaillierte Interpretation des grafischen Elements notwendig, da die Ausdehnung des grafischen Elements als Indikator für den Wert der Distanz intuitiv vom Fahrer erfasst werden kann, insbesondere nach einer gewissen Eingewöhnungsphase. Im Gegensatz dazu ist ein tatsächlicher Abstand aus einem Kamerabild der Umgebung zu interpretieren und gegebenenfalls schwer einzuschätzen.

Dadurch, dass die Ausdehnung des grafischen Elements entlang der vertikalen Achse als Indikator für die laterale Distanz verwendet wird, wird effektiv die Sichtachse aus der Bewegungsebene des Kraftfahrzeugs herausgekippt. Dadurch kann insbesondere ein Nahbereich in einer unmittelbaren Umgebung des Distanzsensorsystems vollständig dargestellt werden. Dies ist insbesondere deshalb vorteilhaft, da AR-Systeme, wie Head-up-Displays oder Head-mounted-Displays, eine minimale Distanz aufweisen können, wobei Objekte innerhalb der minimalen Distanz nicht dargestellt werden können. Der Bereich der minimalen Distanz kann beispielsweise bei Head-up-Displays einige Meter von dem Kraftfahrzeug entfernt enden, so dass mittels des verbesserten Konzepts insbesondere auch ein Nahbereich der Umgebung des Kraftfahrzeugs intuitiv und sicher dargestellt werden kann.

Gemäß zumindest einer Ausführungsform des Parkassistenzsystems ist die Ausdehnung des grafischen Elements entlang der vertikalen Achse umso kleiner, je kleiner der Wert der lateralen Distanz ist.

Das AR-System ist dazu eingerichtet, ein weiteres grafisches Element in das Blickfeld des Fahrers einzublenden, insbesondere auf dem Anzeigeelement darzustellen oder auf das Anzeigeelement zu projizieren. Eine Ausdehnung des weiteren grafischen Elements entlang der vertikalen Achse hängt dabei ebenfalls von dem Wert der Distanz ab. Ein Abstand zwischen dem grafischen Element und dem weiteren grafischen Element hängt von dem Wert der Distanz ab.

Insbesondere kann der Abstand zwischen dem grafischen Element und dem weiteren grafischen Element umso kleiner sein je kleiner der Wert der Distanz ist.

In verschiedenen Ausführungsformen kann es sich bei dem grafischen Element und dem weiteren grafischen Element um Polygone, etwa Rechtecke oder Trapeze handeln. Die Ausdehnung der Polygone entlang der vertikalen Achse entspricht dann einer jeweiligen Seitenlänge oder Höhe des Polygons.

Insbesondere kann die Ausdehnung des grafischen Elements entlang der vertikalen Achse gleich der Ausdehnung des weiteren grafischen Elements entlang der vertikalen Achse sein.

Durch Einblenden des weiteren grafischen Elements und Skalieren des Abstands zwischen den grafischen Elementen und dem Wert der Distanz kann eine noch intuitivere und damit noch sicherere Darstellung ermöglicht werden.

Gemäß zumindest einer Ausführungsform ist das AR-System dazu eingerichtet, das grafische Element, und gegebenenfalls das weitere grafische Element, gemäß einem vorgegebenen Farbschema in das Blickfeld einzublenden, derart, dass die Farbe des grafischen Elements, und gegebenenfalls des weiteren grafischen Elements, von einem Wert der Distanz abhängt.

Durch die Darstellung der grafischen Elemente gemäß dem Farbschema kann eine noch intuitivere und damit noch sicherere Darstellung der lateralen Distanz erzielt werden.

Gemäß zumindest einer Ausführungsform beinhaltet das AR-System ein Head-up-Display-System, um das grafische Element, und gegebenenfalls das weitere Element, in das Blickfeld einzublenden.

In solchen Ausführungsformen kann insbesondere die Windschutzscheibe des Kraftfahrzeugs als Anzeigeelement dienen.

Insbesondere bei dem Einsatz eines Head-up-Display-Systems macht sich der Vorteil des verbesserten Konzepts besonders bemerkbar, da bei einer lateralen Darstellung der Distanz mittels eines Head-up-Displays ein Bereich in der Größenordnung von 5 bis 7 m unmittelbar vor dem Kraftfahrzeug aufgrund eines entsprechenden Blindbereichs des Head-up-Displays nicht abgebildet werden kann. Für Head-up-Displays wird also der Einsatz als Parkassistenzsystem erst durch die erfindungsgemäße Verkippung der Sichtachse aus der lateralen Ebene in die vertikale Richtung sinnvoll möglich.

Gemäß zumindest einer Ausführungsform beinhaltet das AR-System ein auf dem Kopf tragbares visuelles Ausgabegerät, um das grafische Element und insbesondere das weitere grafische Element in das Blickfeld einzublenden.

Bei dem auf dem Kopf tragbaren visuellen Ausgabegerät (englisch "Head-mounted-Display", HMD) handelt es sich insbesondere um ein sogenanntes AR-Brillensystem, auch als Datenbrille oder Smart-Glasses bezeichnet.

In solchen Ausführungsformen dient beispielsweise ein am Kopf des Fahrers befestigbares Displayelement als Anzeigeelement zum Einblenden der grafischen Elemente.

Gemäß einem weiteren unabhängigen Aspekt des verbesserten Konzepts wird ein Verfahren zur Einparkunterstützung für ein Kraftfahrzeug angegeben, wobei mittels eines Distanzsensorsystems des Kraftfahrzeugs abhängig von einer lateralen Distanz zwischen dem Kraftfahrzeug und einem Objekt in einer Umgebung des Kraftfahrzeugs ein Sensorsystem erzeugt wird. Mittels einer Recheneinheit werden basierend auf dem Sensorsystem Grafikdaten erzeugt. Ein grafisches Element wird mittels eines Erweiterte-Realität-Systems des Kraftfahrzeugs in ein Blickfeld eines Fahrers des Kraftfahrzeugs eingeblendet, wobei das grafische Element derart in das Blickfeld eingeblendet wird, dass seine Ausdehnung entlang einer vertikalen Achse von einem Wert der Distanz abhängt.

Gemäß zumindest einer Ausführungsform des Verfahrens zur Einparkunterstützung wird mittels des Erweiterte-Realität-Systems ein weiteres grafisches Element in das Blickfeld eingeblendet. Eine Ausdehnung des weiteren grafischen Elements entlang der vertikalen Achse hängt dabei von dem Wert der Distanz ab, und ein Abstand zwischen dem grafischen Element und dem weiteren grafischen Element hängt von dem Wert der Distanz ab.

Weitere Ausführungsformen des Verfahrens zur Einparkunterstützung nach dem verbesserten Konzept folgen unmittelbar aus den verschiedenen Ausgestaltungsformen des Parkassistenzsystems nach dem verbesserten Konzept und umgekehrt. Insbesondere kann ein Parkassistenzsystem nach dem verbesserten Konzept dazu eingerichtet oder programmiert sein, ein Verfahren zur Einparkunterstützung nach dem verbesserten Konzept durchzuführen oder ein Parkassistenzsystem nach dem verbesserten Konzept führt ein Verfahren nach dem verbesserten Konzept durch.

Gemäß einem weiteren unabhängigen Aspekt des verbesserten Konzepts wird ein Kraftfahrzeug angegeben, welches ein Parkassistenzsystem nach dem verbesserten Konzept aufweist.

Gemäß einem weiteren unabhängigen Aspekt des verbesserten Konzepts wird ein Computerprogramm mit Befehlen angegeben, wobei die Befehle des Computerprogramms bei Ausführung des Computerprogramms durch ein Parkassistenzsystem nach dem verbesserten Konzept, insbesondere durch eine Recheneinheit eines Parkassistenzsystems nach dem verbesserten Konzept, das Parkassistenzsystem dazu veranlassen, ein Verfahren nach dem verbesserten Konzept durchzuführen.

Gemäß einem weiteren unabhängigen Aspekt des verbesserten Konzepts wird ein computerlesbares Speichermedium angegeben, auf dem ein Computerprogramm nach dem verbesserten Konzept gespeichert ist.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Parkassistenzsystems beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. In den Figuren zeigen:
- Fig. 1: ein Kraftfahrzeug mit einer beispielhaften Ausführungsform eines Parkassistenzsystems nach dem verbesserten Konzept; und
- Fig. 2: verschiedene Situationen in einer beispielhaften Ausführungsform eines Verfahrens nach dem verbesserten Konzept.

In den Figuren sind funktionsgleiche Elemente jeweils mit denselben Bezugszeichen versehen.

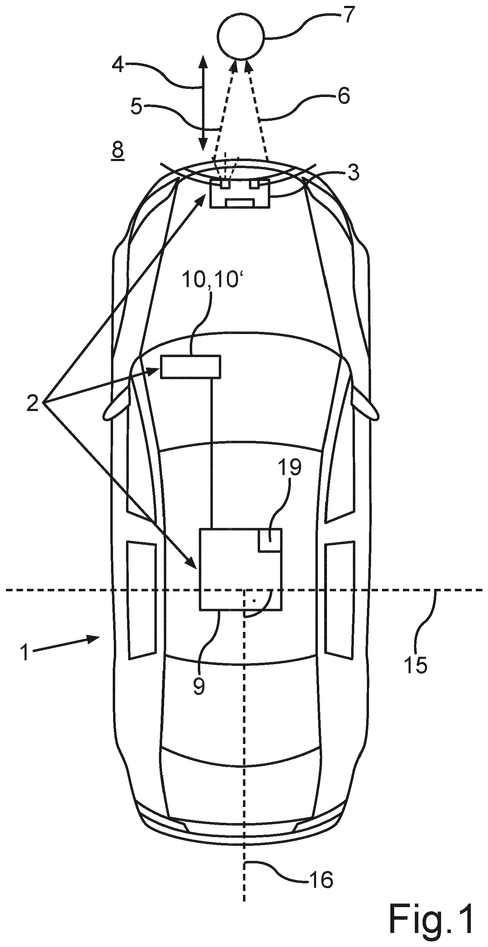

In Fig. 1 ist ein Kraftfahrzeug 1 gezeigt, welches ein Parkassistenzsystem 2 nach dem verbesserten Konzept aufweist. Das Parkassistenzsystem 2 weist ein Distanzsensorsystem 3 auf, welches beispielsweise als aktives optisches Sensorsystem, beispielsweise als Lidar-System, oder als Radar-, Ultraschall- oder Kamerasystem, ausgebildet sein kann. Im vorliegenden Beispiel ist das Distanzsensorsystem 3 beispielsweise als Lidar-System ausgestaltet. Das Distanzsensorsystem 3 ist dann dazu eingerichtet, Lichtimpulse 5 auszusenden, insbesondere in eine Umgebung 8 des Kraftfahrzeugs 1, und Anteile 6 der Lichtimpulse 5, welche beispielsweise von einem Objekt 7 innerhalb der Umgebung 8 reflektiert wurden, zu erfassen. Basierend auf den reflektierten Anteilen 6, beispielsweise einer Intensität der reflektierten Anteile 6 und/oder einer Laufzeit der reflektierten Anteile 6, kann das Distanzsensorsystem 3 ein Sensorsignal erzeugen, welches eine laterale Distanz 4 zwischen dem Kraftfahrzeug 1 und dem Objekt 7 repräsentiert.

Bei der lateralen Distanz 4 handelt es sich insbesondere um einen Abstand zwischen Kraftfahrzeug 1 und Objekt 7 innerhalb einer Ebene, die parallel zu einer Bewegungsebene des Kraftfahrzeugs ist, wobei die Bewegungsebene durch eine Längsachse 16 des Kraftfahrzeugs 1 und eine Querachse 15 des Kraftfahrzeugs 1 aufgespannt wird.

Das Parkassistenzsystem 2 weist außerdem eine Recheneinheit 9 auf, die mit dem Distanzsensorsystem 3 verbunden oder gekoppelt ist, um das Sensorsignal zu empfangen, sowie ein AR-System 10, welches beispielsweise als Head-up-Display ausgebildet ist und ebenfalls mit der Recheneinheit 9 gekoppelt ist.

Das AR-System 10 kann insbesondere eine bilderzeugende Einheit aufweisen, welche basierend auf vorgegebenen Bild- oder Grafikdaten durch die Erzeugung von entsprechenden Lichtsignalen ein Bild erzeugen kann. Das AR-System 10 kann des Weiteren eine Projektionsfläche 10' beinhalten, welche beispielsweise einen Teil der Windschutzscheibe des Kraftfahrzeugs 1 beinhaltet. Außerdem kann das AR-System 10 eine Optikeinheit aufweisen, welche dazu eingerichtet ist, das von der Bilderzeugungseinheit erzeugte Bild auf die Projektionsfläche 10' zu projizieren. Dadurch kann das AR-System 10 ein Bild oder ein grafisches Element auf den Teil der Windschutzscheibe und somit in das Blickfeld des Fahrers des Kraftfahrzeugs 1 projizieren.

Die Recheneinheit 9 oder das Parkassistenzsystem 2 kann optional ein computerlesbares Speichermedium 19 beinhalten, auf dem beispielsweise ein Computerprogramm nach dem verbesserten Konzept gespeichert ist, welches bei Ausführung durch die Recheneinheit 9 das Parkassistenzsystem 2 dazu veranlasst, ein Verfahren zur Einparkunterstützung nach dem verbesserten Konzept aufzuführen.

Im Betrieb des Parkassistenzsystems 2 kann dieses zum Ausführen eines Verfahrens zur Einparkunterstützung nach dem verbesserten Konzept das Distanzsensorsystem 3 ansteuern, um die laterale Distanz 4 zwischen dem Kraftfahrzeug 1 und dem Objekt 7 zu bestimmen beziehungsweise, basierend auf der Distanz, ein Sensorsignal zu erzeugen und an die Recheneinheit 9 zu übertragen. Basierend auf dem Sensorsignal kann die Recheneinheit 9 Grafikdaten erzeugen, welche beispielsweise in Form von Steuerbefehlen oder einer Grafikdatei an das AR-System 10 übertragen werden können.

Die Bilderzeugungseinheit des AR-Systems 10 kann basierend auf den Grafikdaten ein entsprechendes Bild erzeugen und mittels der Optikeinheit auf die Projektionsfläche 10' eines oder mehrere grafische Elemente 11, 12, 13, 14 in das Blickfeld des Fahrers einblenden. Die grafischen Elemente 11, 12, 13, 14 werden insbesondere derart in das Blickfeld des Fahrers eingeblendet, dass deren Ausdehnung entlang einer vertikalen Achse 17 im Blickfeld des Fahrers von der lateralen Distanz 4 abhängt.

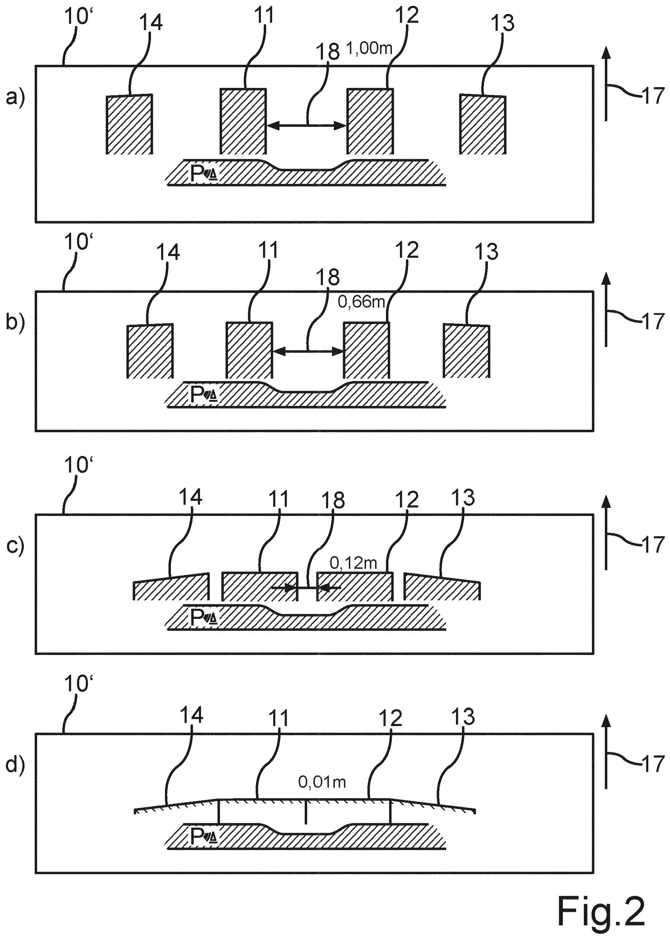

In Fig. 2 sind vier Abbildungen a), b), c) und d) gezeigt, in denen die Projektionsfläche 10' des AR-Systems 10 jeweils in unterschiedlichen Situationen, insbesondere bei unterschiedlichen lateralen Distanzen 4, sowie die entsprechend eingeblendeten grafischen Elemente in den unterschiedlichen Situationen 11, 12, 13, 14 dargestellt sind.

In Abbildung a) der Fig. 2 sind vier nebeneinander mit einem jeweiligen Abstand 18 angeordnete Balken 11, 12, 13, 14 als grafische Elemente dargestellt. Als laterale Distanz 4 wurde beispielsweise 1 m bestimmt. Die Ausdehnung beziehungsweise der Länge der grafischen Elemente 11, 12, 13, 14 entlang der vertikalen Achse 17 hat einen entsprechenden, der lateralen Distanz 4 von 1 m zugeordneten Wert.

In Abbildung b) der Fig. 2 ist eine Situation der Projektionsfläche 10' dargestellt, bei der die laterale Distanz 4 zu 0,66 m bestimmt wurde. Entsprechend ist die Ausdehnung der grafischen Elemente 11, 12, 13, 14 entlang der vertikalen Achse 17 kleiner als in der Abbildung a).

Optional kann auch der Abstand 18 zwischen den einzelnen grafischen Elementen 11, 12, 13, 14 in Abbildung b) kleiner sein als in Abbildung a) und damit die kleinere laterale Distanz 4 wiederspiegeln.

In Abbildung c) ist die Projektionsfläche 10' in einer weiteren Situation gezeigt, in der als laterale Distanz 4 beispielsweise 0,12 m bestimmt wurde. Entsprechend werden die grafischen Elemente 11, 12, 13, 14 mit einer im Vergleich zu Abbildung b) wiederum kleineren Ausdehnung entlang der vertikalen Achse 17 dargestellt und optional mit einem gegenüber Abbildung b) wiederum verkleinerten jeweiligen Abstand 18, um die kleinere laterale Distanz 4 visuell darzustellen.

In Abbildung d) der Fig. 2 ist eine weitere Situation der Projektionsfläche 10' dargestellt, in der als laterale Distanz 4 beispielsweise 0,01 m bestimmt wurde. Dementsprechend werden die grafischen Elemente 11, 12, 13, 14 mit einer noch kleineren Ausdehnung entlang der vertikalen Achse 17 dargestellt als in Abbildung c) sowie optional mit einem nochmals verkleinerten Abstand 18, um die nochmals geringere laterale Distanz 4 darzustellen.

Optional können die grafischen Elemente 11, 12, 13, 14 in den unterschiedlichen Abbildungen a), b), c) und d) in unterschiedlichen Farben oder Farbtönen dargestellt werden. Dabei können Signalfarben genutzt werden, um eine drohende Kollision durch sehr geringe Distanzen intuitiv noch unmittelbarer darzustellen.

Beispielsweise können in Abbildung a) die grafischen Elemente 11, 12, 13, 14 in einer neutralen Farbe, beispielsweise blau, grau oder grün, dargestellt werden. In Abbildung b) und c) können die grafischen Elemente 11, 12, 13, 14 beispielsweise in Gelb- oder Orangetönen dargestellt werden. In Abbildung d) können die grafischen Elemente 11, 12, 13, 14 beispielsweise in Rottönen dargestellt werden.

Nach dem verbesserten Konzept wird eine sichere Einparkunterstützung für ein Kraftfahrzeug ermöglicht. Zum einen kann die Sicherheit des Fahrers durch Einblenden der entsprechenden Informationen in das Blickfeld des Fahrers verbessert werden. Um die Einblendung der Informationen mittels eines AR-Systems vollständig darstellen zu können, wird die Sichtachse, entlang welcher der Abstand gemessen wird, aus einer lateralen Ebene in eine vertikale Richtung des Blickfelds des Fahrers gekippt, so dass effektiv von einer perspektivischen Ansicht in eine Draufsicht gewechselt wird. Dadurch kann insbesondere auch ein Nahbereich des Kraftfahrzeugs mittels des AR-Systems vollständig oder näherungsweise vollständig abgebildet werden. Durch die Darstellung des grafischen Elements mit einer Ausdehnung entlang der vertikalen Achse, die von der lateralen Distanz abhängt, muss der Fahrer weder seinen Bild von der Fahrbahn lenken, um die Informationen zu erfassen, noch muss eine dargestellte Situation wie bei einem Kamerabild interpretiert werden. Die Auffassung der Information ist dadurch unmittelbarer und intuitiver, und der Fahrer kann die Information daher schneller verarbeiten, was zu einer erhöhten Sicherheit führt. Besonders in beengten Situationen kann das verbesserte Konzept dazu beitragen, eine verbesserte Einschätzung der Entfernung zwischen Kraftfahrzeug und Hindernis durch den Fahrer zu ermöglichen und dabei helfen, den verfügbaren Parkraum optimal auszunutzen.

### Bezugszeichenliste

- 1: Kraftfahrzeug
- 2: Parkassistenzsystem
- 3: Distanzsensorsystem
- 4: laterale Distanz
- 5: Licht
- 6: reflektierte Anteile
- 7: Objekt
- 8: Umgebung
- 9: Recheneinheit
- 10: Erweiterte-Realität-System
- 10': Projektionsfläche
- 11, 12, 13, 14: grafische Elemente
- 15: Querachse
- 16: Längsachse
- 17: Vertikalachse
- 18: Abstand
- 19: Speichermedium

## Patentansprüche

1. Parkassistenzsystem für ein Kraftfahrzeug (1), aufweisend
- ein Distanzsensorsystem (3), dazu eingerichtet, in Abhängigkeit einer lateralen Distanz (4) zwischen dem Kraftfahrzeug (1) und einem Objekt (7) in einer Umgebung (8) des Kraftfahrzeugs (1) ein Sensorsignal zu erzeugen; und
- eine Recheneinheit (9), dazu eingerichtet, basierend auf dem Sensorsignal Grafikdaten zu erzeugen;
wobei
- das Parkassistenzsystem (2) ein Erweiterte-Realität-System (10) beinhaltet, das dazu eingerichtet ist, ein grafisches Element (11) in ein Blickfeld eines Fahrers des Kraftfahrzeugs (1) einzublenden; und
- eine Ausdehnung des grafischen Elements (11) entlang einer vertikalen Achse (17) von einem Wert der Distanz (4) abhängt, wobei die vertikale Achse (17) aus Sicht eines Fahrers des Kraftfahrzeugs (1) vertikal verläuft;
**dadurch gekennzeichnet, dass**
- das Erweiterte-Realität-System (10) dazu eingerichtet ist, ein weiteres grafisches Element (12) in das Blickfeld einzublenden;
- eine Ausdehnung des weiteren grafischen Elements (12) entlang der vertikalen Achse (17) von dem Wert der Distanz (4) abhängt; und
- ein Abstand (18) zwischen dem grafischen Element (11) und dem weiteren grafischen Element (12) von dem Wert der Distanz (4) abhängt.

2. Parkassistenzsystem nach Anspruch 1,
**dadurch gekennzeichnet, dass**
die Ausdehnung umso kleiner ist, je kleiner der Wert der Distanz (4) ist.

3. Parkassistenzsystem nach einem der Ansprüche 1 oder2,
**dadurch gekennzeichnet, dass**
das Erweiterte-Realität-System (2) dazu eingerichtet ist, das grafische Element (11) gemäß einem vorgegebenen Farbschema in das Blickfeld einzublenden, derart, dass die Farbe des grafischen Elements (11) von dem Wert der Distanz abhängt.

4. Parkassistenzsystem nach einem der Ansprüche 1 bis 3,
**dadurch gekennzeichnet, dass**
das Erweiterte-Realität-System (10) ein Head-up-Display-System beinhaltet, um das grafische Element (11) in das Blickfeld einzublenden.

5. Parkassistenzsystem nach einem der Ansprüche 1 bis 3,
**dadurch gekennzeichnet, dass**
das Erweiterte-Realität-System (10) ein auf einem Kopf tragbares visuelles Ausgabegerät beinhaltet, um das grafische Element (11) in das Blickfeld einzublenden.

6. Verfahren zur Einparkunterstützung für ein Kraftfahrzeug (1), wobei
- mittels eines Distanzsensorsystems (3) des Kraftfahrzeugs (1) abhängig von einer lateralen Distanz (4) zwischen dem Kraftfahrzeug (1) und einem Objekt (7) in einer Umgebung (8) des Kraftfahrzeugs (1) ein Sensorsignal erzeugt wird; und
- basierend auf dem Sensorsignal mittels einer Recheneinheit (9) Grafikdaten erzeugt werden;
wobei
- ein grafisches Element (11) mittels eines Erweiterte-Realität-Systems (10) des Kraftfahrzeugs (1) in ein Blickfeld eines Fahrers des Kraftfahrzeugs (1) eingeblendet wird; und
- das grafische Element (11) derart in das Blickfeld eingeblendet wird, dass seine Ausdehnung entlang einer vertikalen Achse (17) von einem Wert der Distanz (4) abhängt, wobei die vertikale Achse (17) aus Sicht eines Fahrers des Kraftfahrzeugs (1) vertikal verläuft;
**dadurch gekennzeichnet, dass**
- ein weiteres grafisches Element (12) mittels des Erweiterte-Realität-Systems (10) in das Blickfeld einzublenden;
- eine Ausdehnung des weiteren grafischen Elements (12) entlang der vertikalen Achse (17) von dem Wert der Distanz (4) abhängt; und
- ein Abstand (18) zwischen dem grafischen Element (11) und dem weiteren grafischen Element (12) von dem Wert der Distanz (4) abhängt.

7. Computerprogramm mit Befehlen, welche bei Ausführung des Computerprogramms durch ein Parkassistenzsystem (2) nach einem der Ansprüche 1 bis 5, insbesondere durch die Recheneinheit (9) des Parkassistenzsystems (2), das Parkassistenzsystem (2) dazu veranlassen, ein Verfahren nach Anspruch 6 durchzuführen.

8. Computerlesbares Speichermedium, auf dem ein Computerprogramm nach Anspruch 7 gespeichert ist.

## Claims

1. Parking assistance system for a motor vehicle (1), having
- a distance sensor system (3) configured to generate a sensor signal on the basis of a lateral distance (4) between the motor vehicle (1) and an object (7) in an environment (8) of the motor vehicle (1); and
- a computing unit (9) configured to generate graphics data on the basis of the sensor signal;
wherein
- the parking assistance system (2) contains an augmented reality system (10) configured to overlay a graphics element (11) into a field of vision of a driver of the motor vehicle (1); and
- an extension of the graphics element (11) along a vertical axis (17) is based on a value of the distance (4), wherein the vertical axis (17) runs vertically from the perspective of a driver of the motor vehicle (1);
**characterized in that**
- the augmented reality system (10) is configured to overlay a further graphics element (12) into the field of vision;
- an extension of the further graphics element (12) along the vertical axis (17) is based on the value of the distance (4); and
- a spacing (18) between the graphics element (11) and the further graphics element (12) is based on the value of the distance (4).

2. Parking assistance system according to claim 1,
**characterized in that**
the smaller the value of the distance (4), the smaller the extension.

3. Parking assistance system according to either of claims 1 and 2,
**characterized in that**
the augmented reality system (2) is configured to overlay the graphics element (11) into the field of vision according to a predefined color scheme in such a way that the color of the graphics element (11) is based on the value of the distance.

4. Parking assistance system according to any of claims 1 to 3,
**characterized in that**
the augmented reality system (10) contains a head-up display system in order to overlay the graphics element (11) into the field of vision.

5. Parking assistance system according to any of claims 1 to 3,
**characterized in that**
the augmented reality system (10) contains a visual output device, wearable on the head, in order to overlay the graphics element (11) into the field of vision.

6. Parking support method for a motor vehicle (1), wherein
- by means of a distance sensor system (3) of the motor vehicle (1), a sensor signal is generated on the basis of a lateral distance (4) between the motor vehicle (1) and an object (7) in an environment (8) of the motor vehicle (1); and
- by means of a computing unit (9), graphics data are generated on the basis of the sensor signal;
wherein
- by means of an augmented reality system (10) of the motor vehicle (1), a graphics element (11) is overlaid into a field of vision of a driver of the motor vehicle (1); and
- the graphics element (11) is overlaid into the field of vision in such a way that the extension thereof along a vertical axis (17) is based on a value of the distance (4), wherein the vertical axis (17) runs vertically from the perspective of a driver of the motor vehicle (1);
**characterized in that**
- by means of the augmented reality system (10), a further graphics element (12) to overlay into the field of vision;
- an extension of the further graphics element (12) along the vertical axis (17) is based on the value of the distance (4); and
- a spacing (18) between the graphics element (11) and the further graphics element (12) is based on the value of the distance (4).

7. Computer program comprising instructions which, when the computer program is executed by a parking assistance system (2) according to any of claims 1 to 5, in particular by the computing unit (9) of the parking assistance system (2), cause the parking assistance system (2) to carry out a method according to claim 6.

8. Computer-readable storage medium on which a computer program according to claim 7 is stored.

## Revendications

1. Système d'assistance au stationnement pour un véhicule automobile (1), présentant
- un système de capteur de distance (3), configuré pour générer un signal de capteur en fonction d'une distance latérale (4) entre le véhicule automobile (1) et un objet (7) dans un environnement (8) du véhicule automobile (1) ; et
- une unité de calcul (9), configurée pour générer des données graphiques sur la base du signal de capteur ;
dans lequel
- le système d'assistance au stationnement (2) contient un système de réalité augmentée (10) qui est configuré pour superposer un élément graphique (11) dans un champ de vision d'un conducteur du véhicule automobile (1) ; et
- une extension de l'élément graphique (11) le long d'un axe vertical (17) dépend d'une valeur de la distance (4), dans lequel l'axe vertical (17) s'étend verticalement du point de vue d'un conducteur du véhicule automobile (1) ;
**caractérisé en ce que**
- le système de réalité augmentée (10) est configuré pour superposer un autre élément graphique (12) dans le champ de vision ;
- une extension de l'autre élément graphique (12) le long de l'axe vertical (17) dépend de la valeur de la distance (4) ; et
- un espacement (18) entre l'élément graphique (11) et l'autre élément graphique (12) dépend de la valeur de la distance (4).

2. Système d'assistance au stationnement selon la revendication 1,
**caractérisé en ce que**
l'extension est d'autant plus petite que la valeur de la distance (4) est petite.

3. Système d'assistance au stationnement selon l'une des revendications 1 ou 2,
**caractérisé en ce que**
le système de réalité augmentée (2) est configuré pour superposer l'élément graphique (11) dans le champ de vision conformément à un schéma de couleurs prédéfini, de telle sorte que la couleur de l'élément graphique (11) dépend de la valeur de la distance.

4. Système d'assistance au stationnement selon l'une des revendications 1 à 3,
**caractérisé en ce que**
le système de réalité augmentée (10) contient un système d'affichage tête haute pour superposer l'élément graphique (11) dans le champ de vision.

5. Système d'assistance au stationnement selon l'une des revendications 1 à 3,
**caractérisé en ce que**
le système de réalité augmentée (10) contient un appareil de sortie visuelle pouvant être porté sur une tête pour superposer l'élément graphique (11) dans le champ de vision.

6. Procédé permettant l'aide au stationnement pour un véhicule automobile (1), dans lequel
- un signal de capteur est généré par le biais d'un système de capteur de distance (3) du véhicule automobile (1) en fonction d'une distance latérale (4) entre le véhicule automobile (1) et un objet (7) dans un environnement (8) du véhicule automobile (1) ; et
- des données graphiques sont générées sur la base du signal de capteur par le biais d'une unité de calcul (9) ;
dans lequel
- un élément graphique (11) est superposé dans un champ de vision d'un conducteur du véhicule automobile (1) par le biais d'un système de réalité augmentée (10) du véhicule automobile (1) ; et
- l'élément graphique (11) est superposé dans le champ de vision de telle sorte que son extension le long d'un axe vertical (17) dépend d'une valeur de la distance (4), dans lequel l'axe vertical (17) s'étend verticalement du point de vue d'un conducteur du véhicule automobile (1) ;
**caractérisé en ce que**
- un autre élément graphique (12) à superposer dans le champ de vision par le biais du système de réalité augmentée (10) ;
- une extension de l'autre élément graphique (12) le long de l'axe vertical (17) dépend de la valeur de la distance (4) ; et
- un espacement (18) entre l'élément graphique (11) et l'autre élément graphique (12) dépend de la valeur de la distance (4).

7. Programme informatique comportant des instructions qui, lors de l'exécution du programme informatique par un système d'assistance au stationnement (2) selon l'une des revendications 1 à 5, en particulier par une unité de calcul (9) du système d'assistance au stationnement (2), amènent le système d'assistance au stationnement (2) à mettre en œuvre un procédé selon la revendication 6.

8. Support de stockage lisible par ordinateur, sur lequel est stocké un programme informatique selon la revendication 7.
